(19) Europäisches Patentamt
European Patent Office
Office européen des brevets

(11) **EP 3 527 544 B1**

(12) **EUROPEAN PATENT SPECIFICATION**

(45) Date of publication and mention
of the grant of the patent:
**02.03.2022   Bulletin 2022/09**

(21) Application number: **17859613.6**

(22) Date of filing: **11.10.2017**

(51) International Patent Classification (IPC):
***C04B 24/16*** *(2006.01)*       ***C04B 24/02*** *(2006.01)*
***C04B 24/08*** *(2006.01)*       ***C04B 24/32*** *(2006.01)*

(52) Cooperative Patent Classification (CPC):
**C04B 24/02; C04B 24/08; C04B 24/16;
C04B 24/32; C09K 23/00**

(86) International application number:
**PCT/JP2017/036784**

(87) International publication number:
**WO 2018/070408 (19.04.2018 Gazette 2018/16)**

(54) **FOAMING AGENT COMPOSITION FOR CIVIL ENGINEERING CONSTRUCTION MATERIAL**

SCHAUMMITTELZUSAMMENSETZUNG FÜR HOCH- UND TIEFBAUMATERIAL

COMPOSITION D'AGENT MOUSSANT POUR MATÉRIAU DE CONSTRUCTION DE GÉNIE CIVIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.10.2016   JP 2016200895**

(43) Date of publication of application:
**21.08.2019   Bulletin 2019/34**

(73) Proprietor: **Kao Corporation
Chuo-Ku
Tokyo 103-8210 (JP)**

(72) Inventors:
• **KOYANAGI Koji
Wakayama-shi
Wakayama 640-8580 (JP)**

• **SASAKI Hirotaka
Tokyo 131-8501 (JP)**

(74) Representative: **Hoffmann Eitle
Patent- und Rechtsanwälte PartmbB
Arabellastraße 30
81925 München (DE)**

(56) References cited:
**JP-A- 2003 313 060       JP-A- 2009 013 017
JP-A- 2009 013 017       JP-A- 2010 059 015
JP-A- 2010 059 015       JP-A- 2015 168 929**

**Description**

Field of the Invention

The present invention relates to a foaming agent composition for civil engineering-construction materials capable of forming bubbles that are applied to a civil engineering-construction material and have excellent stability.

Background of the Invention

Bubbles are mixed in building materials such as mortar, concrete, cement milk, gypsum, ceramic porous materials, bricks, refractories and lightweight embankments mainly for the purpose of weight reduction. In addition, in a bubble shield method, bubbles are used for reduction of excavating resistance and abrasion of cutter heads and improvement of workability in excavated soil transportation operation. In addition, bubbles are also used for the purpose of excavation. A foaming agent is used for generating such bubbles that are used for civil engineering-construction materials.
JP-A 2003-313060 discloses a foaming agent for a hydraulic composition that contains an alkyl ether sulfate salt having a hydrocarbon group with 8 to 18 carbons and an alcohol with 8 to 18 carbons at a specific weight ratio.
JP-A 2015-168929 discloses a bubble shield method in which a foaming agent aqueous solution in which a hydrophobic film agent is made soluble with a water-soluble solvent and an anionic surfactant is further mixed is foamed at an expansion ratio of 10 to 50 to form bubbles, and the bubbles are injected into soil and sand on the working face and soil and sand in a chamber of a shield boring machine to form bubble-mixed soil.
JP2010059015 describes a foaming agent for a cement composition that contains a compound A, a compound B and a compound C. Component B represents an amphoteric surfactant.

Summary of the Invention

The present invention provides a foaming agent composition for civil engineering-construction materials capable of forming bubbles that are applied to a civil engineering-construction material and have excellent stability.
The present invention relates to a foaming agent composition for civil engineering-construction materials which is as defined in the claims.
According to the present invention, provided is a foaming agent composition for civil engineering-construction materials capable of forming bubbles that are applied to a civil engineering-construction material and have excellent stability.
Bubbles that are used in the field of civil engineering-construction materials are required to be stable until the bubbles are mixed with a civil engineering-construction material. In addition, the bubbles are mixed with an inorganic material such as soil and sand or hydraulic powder, and therefore required to be stable when mixed with such a material. The foaming agent composition for civil engineering-construction materials of the present invention is capable of forming stable bubbles that meet these requirements.

Embodiments of the Invention

<Foaming agent composition for civil engineering-construction materials>

[Component (A)]

Component (A) is an anionic surfactant. The anionic surfactant is preferably water-soluble. Here, "being water-soluble" means that the solubility in 100 g of water at 25°C is 1.0 g or more. The solubility is preferably 2 g or more, more preferably 3 g or more from the viewpoint of improvement of solubility and the viewpoint of efficiently developing surface-active performance. Component (A) is, for example, an anionic surfactant having an alkyl group or alkenyl group with 8 or more and 22 or less carbons from the viewpoint of improvement of foamability.
The anionic surfactant having an alkyl group or alkenyl group with 8 or more and 22 or less carbons is one or more selected from alkyl or alkenyl sulfonic acids having an alkyl group or alkenyl group with 8 or more and 22 or less carbons, alkyl or alkenyl sulfates having an alkyl group or alkenyl group with 8 or more and 22 or less carbons, olefin sulfonic acids whose olefin has 8 or more and 22 or less carbons, polyoxyalkylene alkyl or alkenyl ether sulfates having an alkyl group or alkenyl group with 8 or more and 22 or less carbons, polyoxyalkylene alkyl or alkenyl ether carboxylic acids having an alkyl group or alkenyl group with 8 or more and 22 or less carbons, and salts thereof from the viewpoint of improvement of foamability and availability.
The anionic surfactant having an alkyl group or alkenyl group with 8 or more and 22 or less carbons is preferably one or more selected from alkyl or alkenyl sulfates having an alkyl group or alkenyl group with 8 or more and 22 or less carbons, olefin sulfonic acids whose olefin has 8 or more and 22 or less carbons, polyoxyalkylene alkyl or alkenyl ether sulfates having an alkyl group or alkenyl group with 8 or more and 22 or less carbons, and salts thereof from the viewpoint of improvement of foamability and availability.

Examples of the salt of the anionic surfactant include alkali metal salts such as sodium salts and potassium salts, ammonium salts and organic ammonium salts.

The polyoxyalkylene alkyl or alkenyl ether sulfate (hereinafter, also referred to as AES) having an alkyl group or alkenyl group with 8 or more and 22 or less carbons is preferably one having an oxyalkylene group having an average number of added moles of 0.5 or more and 50 or less from the viewpoint of improvement of foamability and water solubility. Examples of the oxyalkylene group include an oxyethylene group, an oxypropylene group, and groups obtained by block and/or random addition thereof, and an oxyethylene group is preferable from the viewpoint of water solubility.

From the viewpoint of water solubility and formation of fine bubbles, the number of carbons in the alkyl group or alkenyl group in the AES is 8 or more and 22 or less, preferably 10 or more, more preferably 12 or more, and preferably 16 or less, more preferably 14 or less.

From the viewpoint of formation of stable bubbles, the AES has an average number of moles of added oxyalkylene group of 0.5 or more and 50 or less, preferably 1 or more, and preferably 25 or less, more preferably 15 or less, further preferably 10 or less, furthermore preferably 5 or less, furthermore preferably 3 or less.

The polyoxyalkylene alkyl or alkenyl ether carboxylic acid (hereinafter, also referred to as an ether carboxylic acid) having an alkyl group or alkenyl group with 8 or more and 22 or less carbons is preferably one having an oxyalkylene group having an average number of added moles of 0.5 or more and 50 or less from the viewpoint of improvement of foamability and water solubility. Examples of the oxyalkylene group include an oxyethylene group, an oxypropylene group, and groups obtained by block and/or random addition thereof, and an oxyethylene group is preferable from the viewpoint of water solubility.

From the viewpoint of water solubility and formation of fine bubbles, the number of carbons in the alkyl group or alkenyl group in the ether carboxylic acid is 8 or more and 22 or less, preferably 10 or more, more preferably 12 or more, and preferably 22 or less, more preferably 18 or less.

From the viewpoint of formation of stable bubbles, the ether carboxylic acid has an average number of moles of added oxyalkylene group of 0.5 or more and 50 or less, preferably 1 or more, and preferably 25 or less, more preferably 15 or less, further preferably 10 or less, furthermore preferably 5 or less, furthermore preferably 1 or less.

Component (A) is more preferably a polyoxyalkylene alkyl or alkenyl ether sulfate having an alkyl group or alkenyl group with 8 or more and 22 or less carbons, or a salt thereof from the viewpoint of water solubility, stability in hard water, foamability and safety.

[Component (B)]

Component (B) is a surfactant aid. A surfactant aid has low surface-active performance in itself, but improves the surface-active performance of component (A) when used in combination with component (A).

Component (B) is a hydrocarbon derivative having 8 or more and 22 or less carbons as defined in the claims. Here, examples of the hydrocarbon derivative include higher alcohols and higher fatty acids.

Component (B) is preferably water-insoluble or slightly water-soluble from the viewpoint of formation of stable bubbles. Here, "being water-insoluble or slightly water-soluble" means that the solubility in 100 g of water at 25°C is 0.1 g or less. The solubility is preferably 0.05 g or less, more preferably 0.01 g or less from the viewpoint of efficiently improving surface-active performance.

In addition, the melting point of component (B) is preferably higher than the melting point of component (C) described later from the viewpoint of formation of stable bubbles. The melting point of component (B) is preferably 5°C or higher, more preferably 10°C or higher, further preferably 15°C or higher.

Component (B) is one or more compounds selected from monohydric alcohols having 8 or more and 22 or less carbons and fatty acids having 8 or more and 22 or less carbons from the viewpoint of formation of stable bubbles.

From the viewpoint of water insolubility, bubble stability, safety and improvement of stiffness of bubble films, the number of carbons in the monohydric alcohol or the fatty acid is 8 or more and 22 or less, preferably 10 or more, more preferably 12 or more, and preferably 16 or less, more preferably 14 or less.

Examples of the monohydric alcohol having 8 or more and 22 or less carbons include octanol, decanol, dodecanol, tetradecanol, hexadecanol and octadecanol, and decanol, dodecanol, tetradecanol, hexadecanol and octadecanol are more preferable from the viewpoint of formation of more stable bubbles. Two or more of these alcohols may be used in combination.

Examples of the fatty acid having 8 or more and 22 or less carbons include octanoic acid, decanoic acid, dodecanoic acid, tetradecanoic acid and hexadecanoic acid. Two or more of these fatty acids may be used in combination.

From the viewpoint of water insolubility, bubble stability, compatibility with component (A) and product liquidity, component (B) is preferably a monohydric alcohol having 8 or more, further 10 or more, further 12 or more and 22 or less, further 16 or less, further 14 or less carbons.

[Component (C)]

Component (C) is a water-insoluble or slightly water-soluble nonionic surfactant. For component (C), "being water-insoluble or slightly water-soluble" means that the solubility in 100 g of water at 25°C is 0.1 g or less. The solubility is preferably 0.05 g or less, more preferably 0.01 g or less from the viewpoint of efficiently improving surface-active performance.

In addition, the melting point of component (C) is preferably lower than the melting point of component (B) described above from the viewpoint of formation of stable bubbles. The melting point of component (C) is preferably lower than 5°C, more preferably 3°C or lower.

The polyether compound having an alkyl group or alkenyl group with 5 or more and 22 or less carbons is one or more compounds as defined in the claims.

A polyether compound having an alkyl group or alkenyl group with 8 or more and 22 or less carbons is used from the viewpoint of improvement of bubble stability and improvement of bubble stiffness.

The polyether compound is one that has one alkyl group with 8 or more and 22 or less, preferably 18 or less carbons and that has an average number of moles of added oxypropylene group of 1 or more, preferably 2 or more, more preferably 3 or more and 10 or less, preferably 8 or less, more preferably 7. From the viewpoint of formation of stable bubbles, the polyether compound having an oxypropylene group is a polypropylene glycol monoalkyl ether that has one alkyl group with 8 or more and 22 or less carbons and that has an average number of moles of added oxypropylene of 1 or more and 10 or less.

In addition, glyceryl ethers having an alkyl group or alkenyl group with 5 or more and 22 or less carbons, more preferable are glyceryl ethers having an alkyl group with 5 or more and 22 or less carbons, and further preferable are alkyl monoglyceryl ethers having one alkyl group with 5 or more and 22 or less carbons from the viewpoint of improvement of bubble stability and improvement of bubble stiffness are used.

The number of carbons in the alkyl group or alkenyl group bonded to the glyceryl ether is 5 or more, preferably 8 or more from the viewpoint of improvement of water insolubility, and 22 or less, preferably 18 or less from the viewpoint of blending stability.

From the viewpoint of improvement of bubble stability and improvement of bubble stiffness, component (C) is more preferably one or more water-insoluble or slightly water-soluble nonionic surfactants selected from alkyl monoglyceryl ethers having one alkyl group with 5 or more and 22 or less carbons.

In Patent Document 2, a hydrophobic film agent such as a higher alcohol is made water-soluble with a water-soluble solvent, but because the water-soluble solvent is water-soluble, it is poor in power of dissolving a higher alcohol or the like having high hydrophobicity in a water-coexistent product, and thus, for making the hydrophobic film agent soluble, it is necessary to add a large amount of the water-soluble solvent in the product, resulting in impairment of foam stability that is essential during generation of bubbles.

On the other hand, component (C) for use in the present invention has a hydrophobic group and a hydrophilic group in the molecule, and has a property of being hardly dissolved in both water and oil, and therefore when blended in a system including component (A) and component (B), component (C) is easily arranged at a micellar interface, so that component (B) can be stably blended, and further, an effect of improving foamability and bubble stiffness is exhibited.

[Composition etc.]

From the viewpoint of obtaining sufficient foamability, the foaming agent composition for civil engineering-construction materials of the present invention contains component (A) in an amount of 60% by mass or more, preferably 70% by mass or more, further preferably 75% by mass or more, and 95% by mass or less, preferably 93% by mass or less, further preferably 90% by mass or less provided that the total of component (A), component (B) and component (C) is 100% by mass.

From the viewpoint of bubble stability, the foaming agent composition for civil engineering-construction materials of the present invention contains component (B) in an amount of preferably 2.5% by mass or more, more preferably 3% by mass or more, further preferably 5% by mass or more, and preferably 20% by mass or less, more preferably 16% by mass or less, further preferably 13% by mass or less provided that the total of component (A), component (B) and component (C) is 100% by mass.

From the viewpoint of foaming enhancement and solubility of component (B), the foaming agent composition for civil engineering-construction materials of the present invention contains component (C) in an amount of preferably 2.5% by mass or more, more preferably 3% by mass or more, further preferably 5% by mass or more, and preferably 20% by mass or less, more preferably 16% by mass or less, further preferably 13% by mass or less provided that the total of component (A), component (B) and component (C) is 100% by mass.

From the viewpoint of bubble stability, the mass ratio of component (B) to component (A), (B)/(A) in the foaming agent composition for civil engineering-construction materials of the present invention is preferably 0.03 or more, more preferably 0.06 or more, further preferably 0.08 or more, and preferably 0.20 or less, more preferably 0.18 or less, further preferably 0.15 or less.

Preferably, the foaming agent composition for civil engineering-construction materials of the present invention contains water. The foaming agent composition for civil engineering-construction materials of the present invention is, for example, a foaming agent composition for civil engineering-construction materials containing component (A), component (B), component (C) and water. The foaming agent composition for civil engineering-construction materials of the present invention contains water in an amount of preferably 30% by mass or more, preferably 40% by mass or more, more preferably 50% by mass or more, further preferably 60% by mass or more, and preferably 95% by mass or less, more preferably 90% by mass or less, further preferably 85% by mass or less. In foaming agent composition for civil engineering-construction materials containing component (A), component (B), component (C) and water, the content of the total of component (A), component (B) and component (C) may be 5% by mass or more and 70% by mass or less.

When the foaming agent composition for civil engineering-construction materials of the present invention, which contains component (A), component (B), component (C) and water, is prepared, it is preferable that component (A) is dissolved in water in advance, and the solution is mixed with component (B) and component (C) from the viewpoint of solubility of component (B) in water.

The foaming agent composition for civil engineering-construction materials of the present invention may optionally contain a thickener, a chelating agent, a heavy metal scavenger, a surfactant, a rust inhibitor, a preservative, a colorant, a perfume, a defoaming agent, a solvent, a dispersant, a coagulant, a water-soluble polymer and so on. For the above, those that do not correspond to component (A), component (B) and component (C) are used.

Examples of the civil engineering-construction material that is targeted by the foaming agent composition for civil engineering-construction materials of the present invention include lightweight milk (bubble milk and air milk), lightweight mortar (cellular mortar and air mortar), lightweight concrete (cellular concrete and air concrete), back-filling materials, inside-filling materials, building concrete blocks, ALC (lightweight cellular concrete), grout materials, ceramic porous materials, bricks, refractories, lightweight embankments and pumping mortar. It is expected that functions such as weight reduction, improvement of fluidity, heat insulating properties, heat resistance, imparting of viscosity and control of fluidity will be imparted by mixing of bubbles in these civil engineering-construction materials.

The foaming agent composition of the present invention may be, for example, a foaming agent composition for hydraulic compositions. Specifically, the foaming agent composition of the present invention may be a foaming agent composition for gypsum slurry. In the foaming agent composition for hydraulic compositions such as a foaming agent composition for gypsum slurry, component (A) is preferably an alkyl or alkenyl sulfate having an alkyl group or alkenyl group with 8 or more and 22 or less carbons.

In addition, the foaming agent composition of the present invention may be, for example, a foaming agent composition for lightweight hydraulic compositions, such as lightweight milk (bubble milk and air milk), lightweight mortar (cellular mortar and air mortar), and lightweight concrete (cellular concrete and air concrete).

Preferably, the foaming agent composition for hydraulic compositions is used as an aqueous solution containing component (A), component (B) and component (C) at a concentration of 0.05% by mass or more and 2.0% by mass or less in total (calculated based on the form of solid content). The total content of component (A), component (B) and component (C) in the aqueous solution is more preferably 0.1% by mass or more and more preferably 1.5% by mass or less, furthermore preferably 1.0% by mass or less.

The method for producing a hydraulic composition is preferably a method in which such a foaming agent composition is foamed, so that a hydraulic substance is blended as froth to perform blending and weight reduction because bubbles are uniformly entrained. A diluted aqueous solution of the foaming agent composition or foaming agent may be formed, and directly kneaded into paste, slurry, mortar or concrete having cement or gypsum as a hydraulic substance. The method for adding the foaming agent composition of the present invention to the hydraulic composition is not limited, and the method for frothing the diluted aqueous solution of the foaming agent composition is also not limited. In addition, as the hydraulic composition using the foaming agent composition of the present invention, a hydraulic composition containing cement, gypsum or a mixture thereof is suitable, and examples thereof include cement paste having a reduced weight, lightweight mortar, lightweight concrete and gypsum boards. The density (apparent density) of the hydraulic composition is preferably 0.5 to 2 (g/cm$^3$).

The present invention provides a bubble-containing hydraulic composition for civil engineering-construction materials that contains froth obtained by foaming a liquid composition containing the foaming agent composition for civil engineering-construction materials of the present invention and water, and a hydraulic composition.

In addition, the present invention provides a bubble-containing hydraulic composition for civil engineering-construction materials that contains a hydraulic powder, water, an anionic surfactant (A), a surfactant aid (B) and a water-insoluble or slightly water-soluble nonionic surfactant (C).

The mass ratio of water to hydraulic powder in the bubble-containing hydraulic composition for civil engineering-construction materials is preferably 0.1 or more, more preferably 0.15 or more, and preferably 1.0 or less, more preferably 0.8 or less. The hydraulic powder is composed of cement, gypsum or the like, and preferably includes cement. The bubble-containing hydraulic composition for civil engineering-construction materials may contain a fine aggregate and/or a coarse aggregate. The bubble-containing hydraulic composition for civil engineering-construction materials may contain an admixture agent or admixture material known in the art.

The present invention provides a method for producing a bubble-containing hydraulic composition for civil engineering-construction materials, the method being as defined in the claims.

The bubble-containing hydraulic composition for civil engineering-construction materials described above can be prepared by this production method. In step 1, the expansion ratio of the liquid composition is preferably 5 or more, more preferably 10 or more, and preferably 100 or less, more preferably 80 or less, depending on a use of the hydraulic composition, etc. In step 2, the froth is mixed in an amount of preferably 5% by volume or more, more preferably 10% by volume or more, and preferably 100% by volume or less, more preferably 80% by volume or less relative to the amount of the hydraulic composition, depending on a use of the hydraulic composition, etc. In this production method, an admixture agent or admixture material known in the art can be mixed in step 1 and/or step 2.

In addition, the present invention provides a method for producing a bubble-containing hydraulic composition for civil engineering-construction materials in which a hydraulic powder, water, an anionic surfactant (A), a surfactant aid (B), and a water-insoluble or slightly water-soluble nonionic surfactant (C) are mixed to prepare a hydraulic composition containing bubbles. The bubble-containing hydraulic composition for civil engineering-construction materials described above can be prepared by this production method.

As gypsum, any of neutralized gypsum with high quality, phosphogypsum as a byproduct of phosphoric acid, flue-gas-desulfurized gypsum generated in thermal power generation, natural gypsum containing various impurities and clay, and mixtures thereof can be used.

Clay contained in gypsum is mainly composed of a water-containing silicate mineral (hereinafter, referred to as a clay mineral) having a layered structure, and examples of the clay mineral contained as a particulate mineral in the clay include kaolin minerals (kaolinite, dickite and nacrite), serpentines (lizardite, antigorite and chrysotile), mica clay minerals (illite, sericite, glauconite and celadonite), chlorite, vermiculite and smectites (montmorillonite, beidellite, nontronite, saponite and hectorite).

Examples of the gypsum include anhydrous gypsum, hemihydrate gypsum and dihydrate gypsum. As raw material gypsum, natural gypsum, or chemical gypsum such as neutralized gypsum or byproduct gypsum can be used singly, or a mixture of two or more thereof can be used. The main chemical gypsum is, for example, phosphogypsum, fluorogypsum, titanium gypsum or flue-gas-desulfurized gypsum. In addition, the raw material gypsum may contain recycled gypsum. The recycled gypsum may be recycled gypsum that is recovered from any of waste gypsum boards generated in a gypsum board manufacturer itself, waste gypsum boards generated during new construction and during dismantling, and the like. The present invention can be suitably used for any of the raw material gypsums, and produces an excellent effect for blends of the raw material gypsums at various ratios.

In the present invention, additives to be used for gypsum boards etc. can be used. These additives include general-purpose water-reducing agents, defoaming agents, foam stabilizers, hardening adjusting agents, water repellents, adhesives and retarders, and further, glass fiber, carbon fiber, waste paper, virgin pulp or the like is added as reinforcing fiber, or a gypsum board is also prepared together with perlite, foamed styrene or the like as a lightweight aggregate.

In addition, the foaming agent composition of the present invention may be, for example, a foaming agent composition for a bubble shield method. In the foaming agent composition for a bubble shield method, component (A) is preferably an alkyl or alkenyl sulfate having an alkyl group or alkenyl group with 8 or more and 22 or less carbons.

Preferably, the foaming agent composition for a bubble shield method is used as an aqueous solution containing component (A), component (B) and component (C) at a concentration of 0.05% by mass or more and 2.0% by mass or less in total (calculated based on the form of solid content). The total content of component (A), component (B) and component (C) in the aqueous solution is more preferably 0.1% by mass or more, and more preferably 1.5% by mass or less, furthermore preferably 1.0% by mass or less.

The foaming agent composition for a bubble shield method is used with bubbles injected to an excavation surface (excavation soil wall) at the time of carrying out a shield method. As a method for injecting bubbles, for example, a method can be used in which bubbles are jetted from a nozzle with pressure applied by a pump, but the method for injecting bubbles is not limited to a specific method.

Hereinafter, a specific method for using the foaming agent composition for a bubble shield method will be described.

The foaming agent composition of the present invention, preferably an aqueous solution containing component (A), component (B) and component (C) at the above-described concentration is prepared, and foamed.

Next, foamed bubbles are sprayed to the excavation surface (excavation soil wall), the inside of a shield machine chamber or the inside of a screw conveyor, and kneaded with excavated soil and sand to perform excavation.

As a method for generating bubbles, component (A), component (B) and component (C) (when the components are powder, they are dissolved in water at an arbitrary concentration in advance), and water are transferred to a foaming agent composition mixing tank by respective exclusive pumps, and diluted aqueous solution diluted to an arbitrary concentration is prepared in the foaming agent composition mixing tank. Next, a drag (a bead-like article, torus-shaped article, column-shaped article or metallic scrubbing brush-like article is commonly used) is placed in a pipe, and compressed air and the diluted aqueous solution prepared as described above are simultaneously fed into the pipe containing the drag (generally referred to as a foaming pipe), so that a turbulent flow is produced to foam the diluted aqueous solution.

As a method for spraying bubbles, for example, a method can be used in which bubbles are jetted from an inlet of a shield machine to an excavation surface, the inside of a chamber, a screw conveyor or the like with pressure applied by a pump.

When the foaming agent composition for a bubble shield method is used, the previously prepared foaming agent composition of the present invention can be diluted with water by, for example, preferably 10 times or more, more preferably 20 or more, further preferably 50 or more, and preferably 500 times or less, more preferably 400 times or less, further preferably 200 times or less at a work site. Here, in view of the dilution ratio, the concentration of each component in the foaming agent is set to a high concentration (e.g. 10 to 500 times the concentration after dilution) so that the total content of component (A), component (B) and component (C) in the aqueous solution after dilution falls within a predetermined range.

In addition, a foaming agent composition prepared by mixing component (A), component (B), component (C) and water at a construction site as necessary can also be used as a foaming agent aqueous solution to be foamed.

The total concentration of component (A), component (B) and component (C) in the aqueous solution is preferably 0.2% by mass or more, more preferably 0.25% by mass or more, further preferably 0.4% by mass or more, furthermore preferably 0.5% by mass or more, and preferably 10% by mass or less, more preferably 5% by mass or less, further preferably 2% by mass or less, furthermore preferably 1% by mass or less. This concentration may be applied to an aqueous solution of other foaming agent composition for use in the present invention. In addition, the concentration of an aqueous solution of other foaming agent composition for use in the present invention may be applied to the above-described aqueous solution.

The expansion ratio at the time of use is preferably 5 or more, and preferably 30 or less, more preferably 20 or less from the viewpoint of securing foam stability for effectively fluidizing soil and sand. The expansion ratio means a ratio of the air volume to the volume of the diluted aqueous solution of the foaming agent composition, and for example, an expansion ratio of 10 means that 9 parts by volume of air is kneaded with 1 part by volume of the aqueous solution to foam the aqueous solution to 10 parts by volume. Here, the volume of air is a volume under pressure applied to the ground or mountain to be excavated. Thus, in accordance with the Boyle's law ($PV = P'V'$), the amount of air supplied under atmospheric pressure is changed according to pressure.

In addition, in the bubble shield method the injection ratio of foam is preferably 10% or more, more preferably 15% or more, and preferably 50% or less, more preferably 30% or less. Here, the "injection ratio" means a volume of foam injected into 1 part by volume of the ground or mountain to be excavated, and an injection ratio of 15% means that 0.15 parts by volume of foam is injected into 1 part by volume of the ground or mountain.

A further example of the present invention will be shown below. The matters described in the foaming agent composition for civil engineering-construction materials of the present invention, the bubble-containing hydraulic composition for civil engineering-construction materials and the method for production thereof according to the present invention, and the bubble-containing gypsum slurry for civil engineering-construction materials and the method for production thereof according to the present invention can be applied to the following invention directly or with modifications appropriately made according to respective fields.

Examples

<Example 1 and Comparative Example 1>

(1) Preparation of foaming agent composition

Component (A), component (B) and component (C) shown in Table 1 were mixed with water at 70°C at a mass ratio shown in Table 2 so that the total content of these components was 20% by mass. Thereafter, the resulting mixture was stirred still at 70°C for 1 hour, confirmed to be homogeneous, and then cooled to room temperature (20°C) to obtain a foaming agent composition.

In Table 1-1, POE is an abbreviation for polyoxyethylene, and the numbers in parentheses are average numbers of moles of added oxyethylene group.

Components (A) in Table 1-1 all had a solubility of 1.0 g or more in 100 g of water at 25°C.

Components (B) in Table 1-2 all had a solubility of 0.1 g or less in 100 g of water at 25°C, and a melting point of 5°C or higher.

In addition, C-1 to C-4 in Table 1-3 all had a solubility of 0.1 g or less in 100 g of water at 25°C, and a melting point of lower than 5°C.

In addition, C'-1 in Table 1-3 was mixed with water at 25°C at an arbitrary ratio. It is to be noted that in Table 1-3, C'-1, which does not correspond to component (C), is shown in the column of component (C) for the sake of convenience.

(2) Evaluation of appearance

The obtained foaming agent composition was left standing at room temperature (20°C) for 24 hours, and the appearance thereof was then visually confirmed, and evaluated in accordance with the following criteria. The results are shown in Table 2.

Homogeneous: The foaming agent composition is free from delamination of components and floating or sedimentation of precipitates, and looks the same throughout visually. The same applies when the foaming agent composition is cloudy.

Separated: The foaming agent composition suffers from floating or sedimentation of precipitates, is shown to be heterogeneous visually, and cannot be evenly collected.

(3) Evaluation of foam stability

A diluted aqueous solution of a foaming agent composition, which consisted of 1 part by mass of a foaming agent composition containing component (A), component (B) and component (C) in an amount of 20% by mass in terms of a total content (balance: water), and of 99 parts by mass of water, was foamed using a pump type foam discharge vessel (vessel for Biore U Foam Hand Soap (Kao Corporation), expansion ratio: 12 based on the measured value). A graduated cylinder with a cap was filled with 200 mL of generated bubbles, and then left standing, drainage amount d [mL] was measured after 60 minutes, the degree of foam stability was determined from the following formula, and foam stability was evaluated. It is meant that the higher the value of the degree of foam stability is, the more excellent the stability of foam is. The test was conducted at an ambient temperature of 20°C. The results are shown in Table 2.

$$\text{Degree of foam stability} = (1-d/16.7) \times 100 \ [\%]$$

[Table 1]

Table 1-1

| Component (A) | |
|---|---|
| Symbol | Name |
| A-1 | POE (2) sodium alkyl (dodecyl/tetradecyl = 75/25 (mass ratio)) sulfate |
| A-2 | POE (3) sodium dodecyl sulfate |
| A-3 | A-1/A-2=1/1 (mass ratio) |
| A-4 | POE (23) sodium oleyl sulfate |
| A-5 | Triethanolamine dodecyl sulfate |
| A-6 | Sodium olefin (C14-16) sulfonate [*1] |
| * 1 LIPOLAN LB-440 (manufactured by Lion Corporation) | |

Table 1-2

| Component (B) | |
|---|---|
| Symbol | Name |
| B-1 | Tetradecanol |

(continued)

| Component (B) | |
|---|---|
| Symbol | Name |
| B-2 | Dodecanol |
| B-3 | Tetradecanol/dodecanol = 1/1 (mass ratio) |
| B-4 | Tetradecanoic acid |

Table 1-3

| Component (C) | |
|---|---|
| Symbol | Name |
| C-1 | 2-ethylhexyl glyceryl ether |
| C-2 | Pentyl glyceryl ether |
| C-3 | Isodecyl glyceryl ether |
| C-4 | Polyoxypropylene (average number of added moles: 3) octyl ether |
| C'-1 | Diethylene glycol monobutyl ether |

[Table 2]

| | | Foaming agent composition | | | | | | Appearance | Degree of foam stability (%) |
|---|---|---|---|---|---|---|---|---|---|
| | | Component | | | Content (% by mass)[*1] | | | | |
| | | (A) | (B) | (C) | (A) | (B) | (C) | | |
| Example | 1-1 | A-1 | B-1 | C-1 | 79 | 12 | 9 | Homogeneous | 52 |
| | 1-2 | A-1 | B-1 | C-1 | 80 | 11 | 9 | Homogeneous | 49 |
| | 1-3 | A-1 | B-1 | C-1 | 86 | 5 | 9 | Homogeneous | 40 |
| | 1-4 | A-1 | B-1 | C-1 | 82 | 9 | 9 | Homogeneous | 46 |
| | 1-5 | A-1 | B-1 | C-1 | 84 | 7 | 9 | Homogeneous | 43 |
| | 1-6 | A-2 | B-1 | C-1 | 82 | 9 | 9 | Homogeneous | 43 |
| | 1-7 | A-2 | B-1 | C-1 | 84 | 7 | 9 | Homogeneous | 43 |
| | 1-8 | A-1 | B-1 | C-4 | 82 | 9 | 9 | Homogeneous | 46 |
| | 1-9 | A-3 | B-1 | C-1 | 82 | 9 | 9 | Homogeneous | 46 |
| | 1-10 | A-4 | B-2 | C-2 | 82 | 9 | 9 | Homogeneous | 43 |
| | 1-11 | A-5 | B-3 | C-4 | 82 | 9 | 9 | Homogeneous | 46 |
| | 1-12 | A-6 | B-4 | C-3 | 82 | 9 | 9 | Homogeneous | 46 |
| Comparative Example | 1-1 | A-1 | — | C-1 | 90 | 0 | 10 | Homogeneous | 1 |
| | 1-2 | A-1 | B-1 | — | 90 | 10 | 0 | Separated | 28 |
| | 1-3 | A-1 | B-1 | C'-1 | 82 | 9 | 9 | Separated | 31 |
| | 1-4 | A-1 | B-1 | C'-1 | 77 | 8 | 15 | Homogeneous | 4 |

*1  Content (% by mass) provided that the total of component (A), component (B) and component (C) is 100% by mass

The results in Table 2 show that the foaming agent composition of the present invention has excellent foamability and preparation stability.

<Example 2 and Comparative Example 2>

Effects of the foaming agent compositions prepared in Example 1 and Comparative Example 1 were evaluated when they were used for air milk.

Among materials shown in Table 3, water and ordinary portland cement were put in a vessel, and then stirred by a hand mixer. After the resulting mixture was confirmed to be homogeneous, the foaming agent composition was then added, and the resulting mixture was further stirred and mixed for 1 minute to prepare air milk. The density and the flow value of the air milk were measured by the methods described below. In addition, the state of depression of the surface of the air milk was evaluated by the following method. The results are shown in Table 4.

(1) Density

A stainless cup having an inner volume of 400 $cm^3$ was filled with air milk, and the density was calculated from the mass.

(2) Flow value

Air milk was put in cylinder having an inner diameter of 8 cm and a height of 8 cm, and the diameter after drainage was measured.

(3) Depression of surface

Air milk was put in a mold for a strength measurement test sample, which had an inner diameter of 5 cm and a height of 10 cm, and the state of the air milk was observed at 20°C after 24 hours.

[Table 3]

| Material | Mass [g] |
|---|---|
| Water | 500 |
| Ordinary portland cement | 500 |
| Foaming agent composition | 7.5 |

[Table 4]

| | | | Foaming agent composition | | | | | | Air milk | | |
|---|---|---|---|---|---|---|---|---|---|---|---|
| | | | | Component | | | Content (% by mass)*1 | | | Flow [mm] | Density [g/cm$^3$] | Depression of surface |
| | | Type | (A) | (B) | (C) | (A) | (B) | (C) | | | |
| Example | 2-1 | Example 1-1 | A-1 | B-1 | C-1 | 79 | 12 | 9 | 250 | 0.75 | Not observed |
| | 2-2 | Example 1-6 | A-2 | B-1 | C-1 | 82 | 9 | 9 | 255 | 0.78 | Not observed |
| | 2-3 | Example 1-10 | A-4 | B-2 | C-2 | 82 | 9 | 9 | 265 | 0.81 | Not observed |
| | 2-4 | Example 1-11 | A-5 | B-3 | C-4 | 82 | 9 | 9 | 263 | 0.80 | Not observed |
| | 2-5 | Example 1-12 | A-6 | B-4 | C-3 | 82 | 9 | 9 | 259 | 0.79 | Not observed |
| Comparative Example | 2-1 | Comparative Example 1-1 | A-1 | — | C-1 | 90 | 0 | 10 | 500 | 1.45 | Observed |
| | 2-2 | Comparative Example 1-4 | A-1 | B-1 | C'-1 | 79 | 6 | 15 | 430 | 1.38 | Observed |

*1 Content (% by mass) provided that the total of component (A), component (B) and component (C) is 100% by mass

The results in Table 4 show that by using the foaming agent composition of the present invention, stable foam is introduced, and therefore a moderate flow and density are imparted to air milk, resulting in production of air milk that enables construction as designed.

<Example 3 and Comparative Example 3>

(1) Production of gypsum slurry

Water added with a water-reducing agent was added to a mixture of burnt gypsum and dihydrate gypsum, and the resulting mixture was stirred for 10 seconds at a high speed by a hand mixer. Thereafter, froth was added to gypsum slurry in an amount shown in Table 5, and the resulting mixture was stirred for 20 seconds at a high speed by a hand mixer.
Here, Mighty 150 (Kao Corporation) was used as the water-reducing agent.
In addition, the blending of the gypsum slurry was as shown in Table 5.
In addition, the froth was produced in the following manner: 300 mL of an aqueous solution containing a foaming agent composition, which had a composition shown in Table 6, at a concentration shown in Table 7 was put in a 1 L vessel, and shaken for 1 minute.
Components (A) in Table 6 all had a solubility of 1.0 g or more in 100 g of water at 25°C.
Components (B) in Table 6 all had a solubility of 0.1 g or less in 100 g of water at 25°C, and a melting point of 5°C or higher.
Components (C) in Table 6 all had a solubility of 0.1 g or less in 100 g of water at 25°C, and a melting point of lower than 5°C. It is to be noted that the numbers in parentheses for components (C) in Table 6 are average numbers of moles of added oxypropylene group.

(2) Evaluation

The obtained gypsum slurry was put in a mold for a columnar test sample, which had a diameter of 5 cm and a height of 10 cm. The gypsum slurry was left standing at room temperature for 30 minutes, and then dried at 60°C for 4 hours, and mass of the hardened test sample was measured, and the density was calculated. It is meant that the smaller the density is, the larger the amount of bubbles mixed in the hardened product is, i.e. the smaller the loss of bubbles during hardening is. The results are shown in Table 7.

[Table 5]

| Burnt gypsum (g) | Dihydrate gypsum (g) | Water (g) | Froth (mL) | Water-reducing agent (% by mass relative to burnt gypsum) |
|---|---|---|---|---|
| 250 | 25 | 150 | 400 | 1 |

[Table 6]

| | Foaming agent composition | | | |
|---|---|---|---|---|
| | Composition (% by mass) | | | |
| Symbol | Component (A) | Component (B) | Component (C) | Water |
| | Sodium decyl sulfate | Tetradecanol | Polyoxypropylene (3) octyl ether | |
| a-1 | 29 | | | 71 |
| a-2 | 29 | 1.5 | 1.5 | 68 |
| a-3 | 29 | 3 | 3 | 65 |

[Table 7]

| | | Foaming agent composition | | Test sample density (g/mL) |
|---|---|---|---|---|
| | | Type | Concentration in aqueous solution for froth (% by mass) | |
| Comparative Example | 3-1 | a-1 | 0.2 | 0.777 |
| | 3-2 | a-1 | 0.3 | 0.640 |
| Example | 3-1 | a-2 | 0.2 | 0.530 |
| | 3-2 | a-2 | 0.3 | 0.430 |
| | 3-3 | a-3 | 0.2 | 0.440 |
| | 3-4 | a-3 | 0.3 | 0.400 |

<Example 4>

(1) Production of mortar

Mortar of blend A or blend B in Table 8 was prepared using the following materials.

<Materials>

Cement: ordinary portland cement (density: 3.16 g/cm$^3$)
Admixture material: silica fume (density: 2.2 g/cm$^3$)
Fine aggregate (ordinary sand): land sand from Kimitsu (surface-dry density: 2.61 g/cm$^3$)

Fine aggregate (lightweight aggregate): artificial lightweight aggregate (true density: 0.69 g/cm$^3$, average particle size: 250 μm)
Admixture agent: high-performance AE water-reducing agent Mighty 21VS (manufactured by Kao Corporation)
Foaming agent composition: some of foaming agent compositions prepared in Example 1

The water-bonding material ratio (W/B) was 20%. The water-bonding material ratio (W/B) is a mass ratio of water (W) to bonding material (B), and the bonding material includes ordinary portland cement and silica fume. The fine aggregate included ordinary sand and a lightweight aggregate. The amount of the foaming agent composition added was as shown in Table 9. In Table 9, the amount of the foaming agent composition added is shown as % by mass relative to the total of component (A), component (B) and component (C) in the foaming agent composition to the bonding material. In addition, the foaming agent composition was blended as a part of kneading water.
For kneading and mixing the blended materials, a revolution-rotation type mortar mixer was used. Cement and silica fume were dry-kneaded for 30 seconds, Water was then added, the resulting mixture was kneaded for 120 seconds, a fine aggregate was put in, and the resulting mixture was then further kneaded for 120 seconds to prepare mortar containing bubbles.

(2) Evaluation

In accordance with JIS A 1108, the mortar was taken in a mold, and removed from the mold after 24 hours, and the air content, the specific gravity and the strength of the hardened product were measured. The results are shown in Table 9.
The air content of the hardened product was determined by calculation from the specific gravity.
The specific gravity of the hardened product was calculated from the mass of the test sample in air and the volume of the test sample.
The strength of the hardened product was measured using a compression testing machine.

[Table 8]

| | | | Mortar | |
| | | | Blend A | Blend B |
|---|---|---|---|---|
| Blend material (g) | Water (W) | | 202 | 160 |
| | Bonding material (B) | Cement (C) | 911 | 718 |
| | | Silica fume (SF) | 101 | 79 |
| | Fine aggregate (S) | Ordinary sand | 1214 | — |
| | | Lightweight aggregate | — | 399 |
| | Admixture agent (SP) | High-performance AE water-reducing agent | 30.4 | 27.9 |
| | Foaming agent composition | Example 1-1 | Amount shown in Table 9 | — |
| | | Example 1-11 | — | Amount shown in Table 9 |
| W/B (%) | | | 20 | 20 |

[Table 9]

| | | Amount of foaming agent composition added (% by mass *1) | Hardened product of mortar | | |
|---|---|---|---|---|---|
| | | | Air content (%) | Specific gravity | Compression strength (MPa) |
| Example 4-1-1 | Mortar blend A | 0.0 | 9.5 | 2.21 | 16.9 |
| Example 4-1-2 | | 0.2 | 25.6 | 1.82 | 10.7 |
| Example 4-1-3 | | 0.6 | 30.0 | 1.69 | 8.1 |
| Example 4-1-4 | | 1.0 | 32.7 | 1.64 | 7.0 |
| Example 4-2-1 | Mortar blend B | 0.0 | 12.7 | 1.19 | 8.5 |
| Example 4-2-2 | | 0.2 | 41.4 | 0.79 | 4.5 |
| Example 4-2-3 | | 0.6 | 47.5 | 0.71 | 5.0 |
| Example 4-2-4 | | 1.0 | 58.1 | 0.57 | 3.4 |

*1 % by mass of the total of component (A), component (B) and component (C) relative to bonding material (cement and silica fume)

## Claims

1. A foaming agent composition for civil engineering-construction materials comprising

   an anionic surfactant (A), wherein the anionic surfactant (A) is one or more selected from alkyl or alkenyl sulfonic acids having an alkyl group or alkenyl group with 8 or more and 22 or less carbons, alkyl or alkenyl sulfates having an alkyl group or alkenyl group with 8 or more and 22 or less carbons, olefin sulfonic acids whose olefin has 8 or more and 22 or less carbons, polyoxyalkylene alkyl or alkenyl ether sulfates having an alkyl group or alkenyl group with 8 or more and 22 or less carbons, polyoxyalkylene alkyl or alkenyl ether carboxylic acids having an alkyl group or alkenyl group with 8 or more and 22 or less carbons, and salts thereof,
   a surfactant aid (B), wherein the surfactant aid (B) is one or more compounds selected from monohydric alcohols with 8 or more and 22 or less carbons, and fatty acids with 8 or more and 22 or less carbons, and
   a water-insoluble or slightly water-soluble nonionic surfactant (C), wherein the solubility in 100 g of water at 25°C is 0.1 g or less, and which is one or more compounds selected from: polypropylene glycol monoalkyl ethers having one alkyl group with 8 or more and 22 or less carbons and having an average number of moles of added oxypropylene of 1 or more and 10 or less; and glyceryl ethers having an alkyl group or alkenyl group with 5 or more and 22 or less carbons,
   wherein the anionic surfactant (A) is contained in an amount of 60% by mass or more and 95% by mass or less provided that the total of (A), (B) and (C) is 100% by mass.

2. The foaming agent composition for civil engineering-construction materials according to claim 1, wherein the surfactant aid (B) is a monohydric alcohol with 8 or more and 22 or less carbons.

3. The foaming agent composition for civil engineering-construction materials according to claim 1 or 2, wherein the water-insoluble or slightly water-soluble nonionic surfactant (C) is a glyceryl ether having an alkyl group or alkenyl group with 5 or more and 22 or less carbons.

4. The foaming agent composition for civil engineering-construction materials according to any one of claims 1 to 3, wherein the surfactant aid (B) is contained in an amount of 2.5% by mass or more and 20% by mass or less provided that the total of (A), (B) and (C) is 100% by mass.

5. The foaming agent composition for civil engineering-construction materials according to any one of claims 1 to 4, wherein the water-insoluble or slightly water-soluble nonionic surfactant (C) is contained in an amount of 2.5% by mass or more and 20% by mass or less provided that the total of (A), (B) and (C) is 100% by mass.

6. The foaming agent composition for civil engineering-construction materials according to any one of claims 1 to 5, wherein a mass ratio of (B) to (A), (B)/(A), is 0.03 or more and 0.20 or less.

7. The foaming agent composition for civil engineering-construction materials according to any one of claims 1 to 6, comprising water.

8. A bubble-containing hydraulic composition for civil engineering-construction materials,
wherein the composition comprises:

a hydraulic powder,
water,
an anionic surfactant (A), wherein the anionic surfactant (A) is one or more selected from alkyl or alkenyl sulfonic acids having an alkyl group or alkenyl group with 8 or more and 22 or less carbons, alkyl or alkenyl sulfates having an alkyl group or alkenyl group with 8 or more and 22 or less carbons, olefin sulfonic acids whose olefin has 8 or more and 22 or less carbons, polyoxyalkylene alkyl or alkenyl ether sulfates having an alkyl group or alkenyl group with 8 or more and 22 or less carbons, polyoxyalkylene alkyl or alkenyl ether carboxylic acids having an alkyl group or alkenyl group with 8 or more and 22 or less carbons, and salts thereof,
a surfactant aid (B), wherein the surfactant aid (B) is one or more compounds selected from monohydric alcohols with 8 or more and 22 or less carbons, and fatty acids with 8 or more and 22 or less carbons, and
a water-insoluble or slightly water-soluble nonionic surfactant (C), wherein the solubility in 100 g of water at 25°C is 0.1 g or less, and which is one or more compounds selected from: polypropylene glycol monoalkyl ethers having one alkyl group with 8 or more and 22 or less carbons and having an average number of moles of added oxypropylene of 1 or more and 10 or less; and glyceryl ethers having an alkyl group or alkenyl group with 5 or more and 22 or less carbons,
wherein the anionic surfactant (A) is contained in an amount of 60% by mass or more and 95% by mass or less provided that the total of (A), (B) and (C) is 100% by mass, wherein the composition comprises froth obtained by foaming a liquid composition containing the foaming agent composition for civil engineering-construction materials according to any one of claims 1 to 7 and water.

9. The bubble-containing hydraulic composition for civil engineering-construction materials according to claim 8, wherein the hydraulic powder is gypsum.

10. A method for producing a bubble-containing hydraulic composition for civil engineering-construction materials as defined in claim 8

the method comprising mixing of
a hydraulic powder,
water,
an anionic surfactant (A), wherein the anionic surfactant (A) is one or more selected from alkyl or alkenyl sulfonic acids having an alkyl group or alkenyl group with 8 or more and 22 or less carbons, alkyl or alkenyl sulfates having an alkyl group or alkenyl group with 8 or more and 22 or less carbons, olefin sulfonic acids whose olefin has 8 or more and 22 or less carbons, polyoxyalkylene alkyl or alkenyl ether sulfates having an alkyl group or alkenyl group with 8 or more and 22 or less carbons, polyoxyalkylene alkyl or alkenyl ether carboxylic acids having an alkyl group or alkenyl group with 8 or more and 22 or less carbons, and salts thereof,
a surfactant aid (B), wherein the surfactant aid (B) is one or more compounds selected from monohydric alcohols with 8 or more and 22 or less carbons, and fatty acids with 8 or more and 22 or less carbons, and
a water-insoluble or slightly water-soluble nonionic surfactant (C), wherein the solubility in 100 g of water at 25°C is 0.1 g or less, and which is one or more compounds selected from: polypropylene glycol monoalkyl ethers having one alkyl group with 8 or more and 22 or less carbons and having an average number of moles of added oxypropylene of 1 or more and 10 or less; and glyceryl ethers having an alkyl group or alkenyl group with 5 or more and 22 or less carbons,

to prepare a hydraulic composition containing bubbles,
wherein the anionic surfactant (A) is mixed in an amount of 60% by mass or more and 95% by mass or less provided that the total of (A), (B) and (C) is 100% by mass, froth obtained by foaming a liquid composition containing the foaming agent composition for civil engineering-construction materials according to any one of claims 1 to 7 and water are mixed.

11. The method according to claim 10, wherein the hydraulic powder is gypsum.

12. A method for producing a foaming agent composition for civil engineering-construction materials, wherein

an anionic surfactant (A), wherein the anionic surfactant (A) is one or more selected from alkyl or alkenyl sulfonic acids having an alkyl group or alkenyl group with 8 or more and 22 or less carbons, alkyl or alkenyl sulfates having an alkyl group or alkenyl group with 8 or more and 22 or less carbons, olefin sulfonic acids whose olefin has 8 or more and 22 or less carbons, polyoxyalkylene alkyl or alkenyl ether sulfates having an alkyl group or alkenyl group with 8 or more and 22 or less carbons, polyoxyalkylene alkyl or alkenyl ether carboxylic acids having an alkyl group or alkenyl group with 8 or more and 22 or less carbons, and salts thereof,
a surfactant aid (B), wherein the surfactant aid (B) is one or more compounds selected from monohydric alcohols with 8 or more and 22 or less carbons, and fatty acids with 8 or more and 22 or less carbons, and
a water-insoluble or slightly water-soluble nonionic surfactant (C), wherein the solubility in 100 g of water at 25°C is 0.1 g or less, and which is one or more compounds selected from: polypropylene glycol monoalkyl ethers having one alkyl group with 8 or more and 22 or less carbons and having an average number of moles of added oxypropylene of 1 or more and 10 or less; and glyceryl ethers having an alkyl group or alkenyl group with 5 or more and 22 or less carbons, are mixed,
wherein the anionic surfactant (A) is mixed in an amount of 60% by mass or more and 95% by mass or less provided that the total of (A), (B) and (C) is 100% by mass.

**Patentansprüche**

1. Schaummittelzusammensetzung für Baumaterialien im Bauwesen, umfassend

ein anionisches Tensid (A), wobei das anionische Tensid (A) eines oder mehrere, ausgewählt aus Alkyl- oder Alkenylsulfonsäuren mit einer Alkylgruppe oder Alkenylgruppe mit 8 oder mehr und 22 oder weniger Kohlenstoffatomen, Alkyl- oder Alkenylsulfaten mit einer Alkylgruppe oder Alkenylgruppe mit 8 oder mehr und 22 oder weniger Kohlenstoffatomen, Olefinsulfonsäuren, deren Olefin 8 oder mehr und 22 oder weniger Kohlenstoffatome aufweist, Polyoxyalkylenalkyl- oder Polyoxyalkylenalkenylethersulfaten mit einer Alkylgruppe oder Alkenylgruppe mit 8 oder mehr und 22 oder weniger Kohlenstoffatomen, Polyoxyalkylenalkyl- oder Polyoxyalkylenalkenylethercarbonsäuren mit einer Alkylgruppe oder Alkenylgruppe mit 8 oder mehr und 22 oder weniger Kohlenstoffatomen und Salzen davon, ist,
ein Tensid-Hilfsmittel (B), wobei das Tensid-Hilfsmittel (B) eine oder mehrere Verbindungen, ausgewählt aus einwertigen Alkoholen mit 8 oder mehr und 22 oder weniger Kohlenstoffatomen und Fettsäuren mit 8 oder mehr und 22 oder weniger Kohlenstoffatomen, ist, und
ein wasserunlösliches oder geringfügig wasserlösliches nichtionisches Tensid (C), wobei die Löslichkeit in 100 g Wasser bei 25°C 0,1 g oder weniger beträgt, und welches eine oder mehrere Verbindungen, ausgewählt aus: Polypropylenglycolmonoalkylethern mit einer Alkylgruppe mit 8 oder mehr und 22 oder weniger Kohlenstoffatomen und mit einer durchschnittlichen Molzahl von addiertem Oxypropylen von 1 oder mehr und 10 oder weniger; und Glycerylethern mit einer Alkylgruppe oder Alkenylgruppe mit 5 oder mehr und 22 oder weniger Kohlenstoffatomen, ist,
wobei das anionische Tensid (A) in einer Menge von 60 Massen-% oder mehr und 95 Massen-% oder weniger enthalten ist, mit der Maßgabe, dass die Gesamtheit von (A), (B) und (C) 100 Massen-% beträgt.

2. Schaummittelzusammensetzung für Baumaterialien im Bauwesen gemäß Anspruch 1, wobei das Tensid-Hilfsmittel (B) ein einwertiger Alkohol mit 8 oder mehr und 22 oder weniger Kohlenstoffatomen ist.

3. Schaummittelzusammensetzung für Baumaterialien im Bauwesen gemäß Anspruch 1 oder 2, wobei das wasserunlösliche oder geringfügig wasserlösliche nichtionische Tensid (C) ein Glycerylether mit einer Alkylgruppe oder Alkenylgruppe mit 5 oder mehr und 22 oder weniger Kohlenstoffatomen ist.

**4.** Schaummittelzusammensetzung für Baumaterialien im Bauwesen gemäß einem der Ansprüche 1 bis 3, wobei das Tensid-Hilfsmittel (B) in einer Menge von 2,5 Massen-% oder mehr und 20 Massen-% oder weniger enthalten ist, mit der Maßgabe, dass die Gesamtheit von (A), (B) und (C) 100 Massen-% beträgt.

**5.** Schaummittelzusammensetzung für Baumaterialien im Bauwesen gemäß einem der Ansprüche 1 bis 4, wobei das wasserunlösliche oder geringfügig wasserlösliche nichtionische Tensid (C) in einer Menge von 2,5 Massen-% oder mehr und 20 Massen-% oder weniger enthalten ist, mit der Maßgabe, dass die Gesamtheit von (A), (B) und (C) 100 Massen-% beträgt.

**6.** Schaummittelzusammensetzung für Baumaterialien im Bauwesen gemäß einem der Ansprüche 1 bis 5, wobei das Massenverhältnis von (B) zu (A), (B)/(A), 0,03 oder mehr und 0,20 oder weniger beträgt.

**7.** Schaummittelzusammensetzung für Baumaterialien im Bauwesen gemäß nach einem der Ansprüche 1 bis 6, umfassend Wasser.

**8.** Blasenhaltige hydraulische Zusammensetzung für Baumaterialien im Bauwesen,
wobei die Zusammensetzung umfasst:

> ein hydraulisches Pulver,
> Wasser,
> ein anionisches Tensid (A), wobei das anionische Tensid (A) eines oder mehrere, ausgewählt aus Alkyl- oder Alkenylsulfonsäuren mit einer Alkylgruppe oder Alkenylgruppe mit 8 oder mehr und 22 oder weniger Kohlenstoffatomen, Alkyl- oder Alkenylsulfaten mit einer Alkylgruppe oder Alkenylgruppe mit 8 oder mehr und 22 oder weniger Kohlenstoffatomen, Olefinsulfonsäuren, deren Olefin 8 oder mehr und 22 oder weniger Kohlenstoffatome aufweist, Polyoxyalkylenalkyl- oder Polyoxyalkylenalkenylethersulfaten mit einer Alkylgruppe oder Alkenylgruppe mit 8 oder mehr und 22 oder weniger Kohlenstoffatomen, Polyoxyalkylenalkyl- oder Polyoxyalkylenalkenylethercarbonsäuren mit einer Alkylgruppe oder Alkenylgruppe mit 8 oder mehr und 22 oder weniger Kohlenstoffatomen und Salzen davon, ist,
> ein Tensid-Hilfsmittel (B), wobei das Tensid-Hilfsmittel (B) eine oder mehrere Verbindungen, ausgewählt aus einwertigen Alkoholen mit 8 oder mehr und 22 oder weniger Kohlenstoffatomen und Fettsäuren mit 8 oder mehr und 22 oder weniger Kohlenstoffatomen, ist, und
> ein wasserunlösliches oder geringfügig wasserlösliches nichtionisches Tensid (C), wobei die Löslichkeit in 100 g Wasser bei 25°C 0,1 g oder weniger beträgt, und welches eine oder mehrere Verbindungen, ausgewählt aus: Polypropylenglycolmonoalkylethern mit einer Alkylgruppe mit 8 oder mehr und 22 oder weniger Kohlenstoffatomen und mit einer durchschnittlichen Molzahl von addiertem Oxypropylen von 1 oder mehr und 10 oder weniger; und Glycerylethern mit einer Alkylgruppe oder Alkenylgruppe mit 5 oder mehr und 22 oder weniger Kohlenstoffatomen, ist,
> wobei das anionische Tensid (A) in einer Menge von 60 Massen-% oder mehr und 95 Massen-% oder weniger enthalten ist, mit der Maßgabe, dass die Gesamtheit von (A), (B) und (C) 100 Massen-% beträgt, wobei die Zusammensetzung Schaum, erhalten durch Aufschäumen einer flüssigen Zusammensetzung, enthaltend die Schaummittelzusammensetzung für Baumaterialien im Bauwesen gemäß einem der Ansprüche 1 bis 7 und Wasser, umfasst.

**9.** Blasenhaltige hydraulische Zusammensetzung für Baumaterialien im Bauwesen gemäß Anspruch 8, wobei das hydraulische Pulver Gips ist.

**10.** Verfahren zur Herstellung einer blasenhaltigen hydraulischen Zusammensetzung für Baumaterialien im Bauwesen, wie in Anspruch 8 definiert,

> das Verfahren umfassend das Mischen von
> einem hydraulischen Pulver,
> Wasser,
> einem anionischen Tensid (A), wobei das anionische Tensid (A) eines oder mehrere, ausgewählt aus Alkyl- oder Alkenylsulfonsäuren mit einer Alkylgruppe oder Alkenylgruppe mit 8 oder mehr und 22 oder weniger Kohlenstoffatomen, Alkyl- oder Alkenylsulfaten mit einer Alkylgruppe oder Alkenylgruppe mit 8 oder mehr und 22 oder weniger Kohlenstoffatomen, Olefinsulfonsäuren, deren Olefin 8 oder mehr und 22 oder weniger Kohlenstoffatome aufweist, Polyoxyalkylenalkyl- oder Polyoxyalkylenalkenylethersulfaten mit einer Alkylgruppe oder Alkenylgruppe mit 8 oder mehr und 22 oder weniger Kohlenstoffatomen, Polyoxyalkylenalkyl- oder Polyoxy-

17

alkylenalkylethercarbonsäuren mit einer Alkylgruppe oder Alkenylgruppe mit 8 oder mehr und 22 oder weniger Kohlenstoffatomen und Salzen davon, ist,

einem Tensid-Hilfsmittel (B), wobei das Tensid-Hilfsmittel (B) eine oder mehrere Verbindungen, ausgewählt aus einwertigen Alkoholen mit 8 oder mehr und 22 oder weniger Kohlenstoffatomen und Fettsäuren mit 8 oder mehr und 22 oder weniger Kohlenstoffatomen, ist, und

einem wasserunlöslichen oder geringfügig wasserlöslichen nichtionischen Tensid (C), wobei die Löslichkeit in 100 g Wasser bei 25°C 0,1 g oder weniger beträgt, und welches eine oder mehrere Verbindungen, ausgewählt aus: Polypropylenglycolmonoalkylethern mit einer Alkylgruppe mit 8 oder mehr und 22 oder weniger Kohlenstoffatomen und mit einer durchschnittlichen Molzahl von addiertem Oxypropylen von 1 oder mehr und 10 oder weniger; und Glycerylethern mit einer Alkylgruppe oder Alkenylgruppe mit 5 oder mehr und 22 oder weniger Kohlenstoffatomen, ist,

um eine hydraulische Zusammensetzung, die Blasen enthält, herzustellen,

wobei das anionische Tensid (A) in einer Menge von 60 Massen-% oder mehr und 95 Massen-% oder weniger beigemischt ist, mit der Maßgabe, dass die Gesamtheit von (A), (B) und (C) 100 Massen-% beträgt, das Mischen von Schaum, erhalten durch Aufschäumen einer flüssigen Zusammensetzung, enthaltend die Schaummittelzusammensetzung für Baumaterialien im Bauwesen gemäß einem der Ansprüche 1 bis 7 und Wasser.

**11.** Verfahren gemäß Anspruch 10, wobei das hydraulische Pulver Gips ist.

**12.** Verfahren zur Herstellung einer

Schaummittelzusammensetzung für Baumaterialien im Bauwesen, wobei

ein anionisches Tensid (A), wobei das anionische Tensid (A) eines oder mehrere, ausgewählt aus Alkyl- oder Alkenylsulfonsäuren mit einer Alkylgruppe oder Alkenylgruppe mit 8 oder mehr und 22 oder weniger Kohlenstoffatomen, Alkyl- oder Alkenylsulfaten mit einer Alkylgruppe oder Alkenylgruppe mit 8 oder mehr und 22 oder weniger Kohlenstoffatomen, Olefinsulfonsäuren, deren Olefin 8 oder mehr und 22 oder weniger Kohlenstoffatome aufweist, Polyoxyalkylenalkyl- oder Polyoxyalkylenalkenylethersulfaten mit einer Alkylgruppe oder Alkenylgruppe mit 8 oder mehr und 22 oder weniger Kohlenstoffatomen, Polyoxyalkylenalkyl- oder Polyoxyalkylenalkenylethercarbonsäuren mit einer Alkylgruppe oder Alkenylgruppe mit 8 oder mehr und 22 oder weniger Kohlenstoffatomen und Salzen davon, ist,

ein Tensid-Hilfsmittel (B), wobei das Tensid-Hilfsmittel (B) eine oder mehrere Verbindungen, ausgewählt aus einwertigen Alkoholen mit 8 oder mehr und 22 oder weniger Kohlenstoffatomen und Fettsäuren mit 8 oder mehr und 22 oder weniger Kohlenstoffatomen, ist, und

ein wasserunlösliches oder geringfügig wasserlösliches nichtionisches Tensid (C), wobei die Löslichkeit in 100 g Wasser bei 25°C 0,1 g oder weniger beträgt, und welches eine oder mehrere Verbindungen, ausgewählt aus: Polypropylenglycolmonoalkylethern mit einer Alkylgruppe mit 8 oder mehr und 22 oder weniger Kohlenstoffatomen und mit einer durchschnittlichen Molzahl von addiertem Oxypropylen von 1 oder mehr und 10 oder weniger; und Glycerylethern mit einer Alkylgruppe oder Alkenylgruppe mit 5 oder mehr und 22 oder weniger Kohlenstoffatomen, ist, gemischt werden,

wobei das anionische Tensid (A) in einer Menge von 60 Massen-% oder mehr und 95 Massen-% oder weniger beigemischt ist, mit der Maßgabe, dass die Gesamtheit von (A), (B) und (C) 100 Massen-% beträgt.

**Revendications**

**1.** Composition d'agent moussant pour matériaux de construction de génie civil comprenant

un tensioactif anionique (A), dans laquelle le tensioactif anionique (A) est un ou plusieurs sélectionnés parmi les acides alkyl- ou alcényl-sulfoniques présentant un groupe alkyle ou un groupe alcényle avec 8 ou plus et 22 ou moins carbones, les sulfates d'alkyle ou d'alcényle présentant un groupe alkyle ou un groupe alcényle avec 8 ou plus et 22 ou moins carbones, les acides sulfoniques d'oléfine dont l'oléfine présente 8 ou plus et 22 ou moins carbones, les éthersulfates d'alkyle ou d'alcényle polyoxyalkylénés présentant un groupe alkyle ou un groupe alcényle avec 8 ou plus et 22 ou moins carbones, les acides alkyl- ou alcényl-éther carboxyliques polyoxyalkylénés présentant un groupe alkyle ou un groupe alcényle avec 8 ou plus et 22 ou moins carbones, et les sels de ceux-ci,

un auxiliaire de tensioactif (B), dans laquelle l'auxiliaire de tensioactif (B) est un ou plusieurs composés sélectionnés parmi les alcools monohydriques avec 8 ou plus et 22 ou moins carbones, et les acides gras avec 8 ou plus et 22 ou moins carbones, et

un tensioactif non ionique (C) insoluble dans l'eau ou légèrement soluble dans l'eau, dans laquelle la solubilité dans 100 g d'eau à 25°C est de 0,1 g ou moins, et qui est un ou plusieurs composés sélectionnés parmi : les polypropylène glycol monoalkyléthers présentant un groupe alkyle avec 8 ou plus et 22 ou moins carbones et présentant un nombre moyen de moles d'oxypropylène ajouté de 1 ou plus et de 10 ou moins ; et les glycéryléthers présentant un groupe alkyle ou un groupe alcényle avec 5 ou plus et 22 ou moins carbones, dans laquelle le tensioactif anionique (A) est contenu en une quantité de 60 % en masse ou plus et de 95 % en masse ou moins à condition que le total de (A), (B) et (C) soit de 100 % en masse.

**2.** Composition d'agent moussant pour matériaux de construction de génie civil selon la revendication 1, dans laquelle l'auxiliaire de tensioactif (B) est un alcool monohydrique avec 8 ou plus et 22 ou moins carbones.

**3.** Composition d'agent moussant pour matériaux de construction de génie civil selon la revendication 1 ou 2, dans laquelle le tensioactif non ionique (C) insoluble dans l'eau ou légèrement soluble dans l'eau est un glycéryléther présentant un groupe alkyle ou un groupe alcényle avec 5 ou plus et 22 ou moins carbones.

**4.** Composition d'agent moussant pour matériaux de construction de génie civil selon l'une quelconque des revendications 1 à 3, dans laquelle l'auxiliaire de tensioactif (B) est contenu en une quantité de 2,5 % en masse ou plus et de 20 % en masse ou moins à condition que le total de (A), (B) et (C) soit de 100 % en masse.

**5.** Composition d'agent moussant pour matériaux de construction de génie civil selon l'une quelconque des revendications 1 à 4, dans laquelle le tensioactif non ionique (C) insoluble dans l'eau ou légèrement soluble dans l'eau est contenu en une quantité de 2,5 % en masse ou plus et de 20 % en masse ou moins à condition que le total de (A), (B) et (C) soit de 100 % en masse.

**6.** Composition d'agent moussant pour matériaux de construction de génie civil selon l'une quelconque des revendications 1 à 5, dans laquelle un rapport en masse de (B) sur (A), (B)/(A), est de 0,03 ou plus et de 0,20 ou moins.

**7.** Composition d'agent moussant pour matériaux de construction de génie civil selon l'une quelconque des revendications 1 à 6, comprenant de l'eau.

**8.** Composition hydraulique contenant des bulles pour matériaux de construction de génie civil, dans laquelle la composition comprend :

une poudre hydraulique,
de l'eau,
un tensioactif anionique (A), dans laquelle le tensioactif anionique (A) est un ou plusieurs sélectionnés parmi les acides alkyl- ou alcényl-sulfoniques présentant un groupe alkyle ou un groupe alcényle avec 8 ou plus et 22 ou moins carbones, les sulfates d'alkyle ou d'alcényle présentant un groupe alkyle ou un groupe alcényle avec 8 ou plus et 22 ou moins carbones, les acides sulfoniques d'oléfine dont l'oléfine présente 8 ou plus et 22 ou moins carbones, les éthersulfates d'alkyle ou d'alcényle polyoxyalkylénés présentant un groupe alkyle ou un groupe alcényle avec 8 ou plus et 22 ou moins carbones, les acides alkyl- ou alcényl-éther carboxyliques polyoxyalkylénés présentant un groupe alkyle ou un groupe alcényle avec 8 ou plus et 22 ou moins carbones, et les sels de ceux-ci,
un auxiliaire de tensioactif (B), dans laquelle l'auxiliaire de tensioactif (B) est un ou plusieurs composés sélectionnés parmi les alcools monohydriques avec 8 ou plus et 22 ou moins carbones, et les acides gras avec 8 ou plus et 22 ou moins carbones, et
un tensioactif non ionique (C) insoluble dans l'eau ou légèrement soluble dans l'eau, dans laquelle la solubilité dans 100 g d'eau à 25 °C est de 0,1 g ou moins, et qui est un ou plusieurs composés sélectionnés parmi : les polypropylène glycol monoalkyléthers présentant un groupe alkyle avec 8 ou plus et 22 ou moins carbones et présentant un nombre moyen de moles d'oxypropylène ajouté de 1 ou plus et de 10 ou moins ; et les glycéryléthers présentant un groupe alkyle ou un groupe alcényle avec 5 ou plus et 22 ou moins carbones, dans laquelle le tensioactif anionique (A) est contenu en une quantité de 60 % en masse ou plus et de 95 % en masse ou moins à condition que le total de (A), (B) et (C) soit de 100% en masse, dans laquelle la composition comprend une mousse obtenue par moussage d'une composition liquide contenant la composition d'agent moussant pour matériaux de construction de génie civil selon l'une quelconque des revendications 1 à 7 et de l'eau.

**9.** Composition hydraulique contenant des bulles pour matériaux de construction de génie civil selon la revendication 8, dans laquelle la poudre hydraulique est un gypse.

10. Procédé de production d'une composition hydraulique contenant des bulles pour matériaux de construction de génie civil telle que définie dans la revendication 8

le procédé comprenant l'étape consistant à mélanger
une poudre hydraulique,
de l'eau,
un tensioactif anionique (A), dans lequel le tensioactif anionique (A) est un ou plusieurs sélectionnés parmi les acides alkyl- ou alcényl-sulfoniques présentant un groupe alkyle ou un groupe alcényle avec 8 ou plus et 22 ou moins carbones, les sulfates d'alkyle ou d'alcényle présentant un groupe alkyle ou un groupe alcényle avec 8 ou plus et 22 ou moins carbones, les acides sulfoniques d'oléfine dont l'oléfine présente 8 ou plus et 22 ou moins carbones, les éthersulfates d'alkyle ou d'alcényle polyoxyalkylénés présentant un groupe alkyle ou un groupe alcényle avec 8 ou plus et 22 ou moins carbones, les acides alkyl- ou alcényl-éther carboxyliques polyoxyalkylénés présentant un groupe alkyle ou un groupe alcényle avec 8 ou plus et 22 ou moins carbones, et les sels de ceux-ci,
un auxiliaire de tensioactif (B), dans lequel l'auxiliaire de tensioactif (B) est un ou plusieurs composés sélectionnés parmi les alcools monohydriques avec 8 ou plus et 22 ou moins carbones, et les acides gras avec 8 ou plus et 22 ou moins carbones, et
un tensioactif non ionique (C) insoluble dans l'eau ou légèrement soluble dans l'eau, dans lequel la solubilité dans 100 g d'eau à 25 °C est de 0,1 g ou moins, et qui est un ou plusieurs composés sélectionnés parmi : les polypropylène glycol monoalkyléthers présentant un groupe alkyle avec 8 ou plus et 22 ou moins carbones et présentant un nombre moyen de moles d'oxypropylène ajouté de 1 ou plus et de 10 ou moins ; et les glycéryléthers présentant un groupe alkyle ou un groupe alcényle avec 5 ou plus et 22 ou moins carbones,
pour préparer une composition hydraulique contenant des bulles,
dans lequel le tensioactif anionique (A) est mélangé en une quantité de 60 % en masse ou plus et de 95 % en masse ou moins à condition que le total de (A), (B) et (C) soit de 100% en masse, une mousse obtenue par moussage d'une composition liquide contenant la composition d'agent moussant pour matériaux de construction de génie civil selon l'une quelconque des revendications 1 à 7 et de l'eau sont mélangées.

11. Procédé selon la revendication 10, dans lequel la poudre hydraulique est un gypse.

12. Procédé de production d'une composition d'agent moussant pour matériaux de construction de génie civil, dans lequel

un tensioactif anionique (A), dans lequel le tensioactif anionique (A) est un ou plusieurs sélectionnés parmi les acides alkyl- ou alcényl-sulfoniques présentant un groupe alkyle ou un groupe alcényle avec 8 ou plus et 22 ou moins carbones, les sulfates d'alkyle ou d'alcényle présentant un groupe alkyle ou un groupe alcényle avec 8 ou plus et 22 ou moins carbones, les acides sulfoniques d'oléfine dont l'oléfine présente 8 ou plus et 22 ou moins carbones, les éthersulfates d'alkyle ou d'alcényle polyoxyalkylénés présentant un groupe alkyle ou un groupe alcényle avec 8 ou plus et 22 ou moins carbones, les acides alkyl- ou alcényl-éther carboxyliques polyoxyalkylénés présentant un groupe alkyle ou un groupe alcényle avec 8 ou plus et 22 ou moins carbones, et les sels de ceux-ci,
un auxiliaire de tensioactif (B), dans lequel l'auxiliaire de tensioactif (B) est un ou plusieurs composés sélectionnés parmi les alcools monohydriques avec 8 ou plus et 22 ou moins carbones, et les acides gras avec 8 ou plus et 22 ou moins carbones, et
un tensioactif non ionique (C) insoluble dans l'eau ou légèrement soluble dans l'eau, dans lequel la solubilité dans 100 g d'eau à 25 °C est de 0,1 g ou moins, et qui est un ou plusieurs composés sélectionnés parmi : les polypropylène glycol monoalkyléthers présentant un groupe alkyle avec 8 ou plus et 22 ou moins carbones et présentant un nombre moyen de moles d'oxypropylène ajouté de 1 ou plus et de 10 ou moins ; et les glycéryléthers présentant un groupe alkyle ou un groupe alcényle avec 5 ou plus et 22 ou moins carbones, sont mélangés
dans lequel le tensioactif anionique (A) est mélangé en une quantité de 60 % en masse ou plus et de 95 % en masse ou moins à condition que le total de (A), (B) et (C) soit de 100 % en masse.

**EP 3 527 544 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003313060 A
- JP 2015168929 A
- JP 2010059015 B